# EUROPÄISCHE PATENTSCHRIFT

(11) **EP 2 495 543 B1**
(45) Veröffentlichungstag und Bekanntmachung des Hinweises auf die Patenterteilung: **05.08.2015**
(21) Anmeldenummer: 12000384.3
(22) Anmeldetag: 21.01.2012
(51) Int. Cl.: G01M 17/007, G08G 1/16

(54) **Verfahren zur Emulation eines Umgebungssensors in einem Kraftfahrzeug und zum Testen eines vorausschauenden Sicherheitssystems sowie Emulationsvorrichtung**
Method for emulating an environmental sensor in a motor vehicle and testing a forward-looking safety system and emulation device
Procédé d'émulation d'un capteur d'environnement dans un véhicule automobile et pour tester un système de sécurité prévisionnel ainsi que dispositif d'émulation

(30) Priorität: 04.03.2011 DE 102011012961
(43) Veröffentlichungstag der Anmeldung: 05.09.2012
(73) Patentinhaber: Audi AG, 85045 Ingolstadt (DE)
(72) Erfinder: Dirndorfer, Tobias, 80799 München (DE); Larice, Markus, 85123 Karlskron (DE); Botsch, Michael, 85057 Ingolstadt (DE)
(74) Vertreter: Thielmann, Frank

(56) Entgegenhaltungen:
- EP-A1- 1 998 160
- DE-A1- 19 962 533

## Beschreibung

Die Erfindung betrifft ein Verfahren zur Emulation eines Umgebungssensors in einem Kraftfahrzeug in einer bestimmten Kollisionssituation mit einer ersten vorgegebenen Geschwindigkeit des Kraftfahrzeugs, ein Verfahren zum Testen eines vorausschauenden Sicherheitssystems eines Kraftfahrzeugs in einer Kollisionssituation, welches Sicherheitssystem eine Daten eines Umgebungssensors, insbesondere über einen Fahrzeugbus, empfangende Steuereinrichtung umfasst, sowie eine Emulationsvorrichtung für einen Umgebungssensor eines Kraftfahrzeugs.

Aus der DE19962533 ist eine Einrichtung zur Prüfung der Funktionsweise einer Abstandsregeleinrichtung eines Kraftfahrzeuges bekannt, wobei in einer Simulationseinrichtung tatsächliche, während einer Fahrt des Kraftfahrzeuges aufgenommene Daten eines Abstandssensors gespeichert sind.

Vorausschauende Sicherheitssysteme für Kraftfahrzeuge sind grundsätzlich bekannt. Dabei wird durch Umgebungssensoren (vorausschauende Sensoren), beispielsweise Laserscanner, Radarsensoren, PMD (Photonic Mixer Device), bildgebende Sensoren und dergleichen, die Umgebung des Kraftfahrzeugs auf mögliche Kollisionssituationen überwacht, um dann mittels einer Steuereinrichtung Maßnahmen auszulösen, die einen Unfall vermeiden oder die Unfallschwere mindern. Beispielsweise können Bremseingriffe vorgenommen werden oder es können Airbag-Algorithmen vorparametriert werden und dergleichen.

Um die vorausschauenden Sicherheitssysteme testen zu können, ist es bekannt, die Systeme nebst den verwendeten Umgebungssensoren in ein Kraftfahrzeug einzubauen, mit welchem ein sogenannter "Crashtest" gefahren wird, das bedeutet, es wird eine bestimmte, definierte Kollisionssituation gezielt herbeigeführt. Dabei kommt es in den meisten Fällen auch zu einer tatsächlichen Kollision, da nur bei tatsächlichen Kollisionen die realen vorausschauenden Sensordaten von den Umgebungssensoren aufgenommen werden können.

Dabei ist nachteilhaft, dass der Einbau und die Integration der Umgebungssensoren (vorausschauende Sensoren) teuer sind und die meisten, beispielsweise in Crashhallen untersuchten Kraftfahrzeuge nicht über derartige Umgebungssensoren verfügen. Zudem werden bei Crashtests die vorausschauenden Sensoren meist zerstört, obwohl es sich dabei um sehr teuere Prototypen handeln kann.

Der Erfindung liegt daher die Aufgabe zugrunde, eine Möglichkeit anzugeben, sehr realitätsnahe Sensordaten eines Umgebungssensors während eines Crashtests zu erhalten, ohne dass dabei ein Einbau nötig ist oder gar eine Vernichtung des Sensors zu befürchten besteht.

Zur Lösung dieser Aufgabe wird erfindungsgemäß ein Verfahren zur Emulation eines Umgebungssensors in einem Kraftfahrzeug in einer bestimmten Kollisionssituation mit einer ersten vorgegebenen Geschwindigkeit des Kraftfahrzeugs vorgeschlagen, bei dem bei einer zweiten Geschwindigkeit, die kleiner als die erste Geschwindigkeit ist, mit dem und/oder einem insbesondere baugleichen Kraftfahrzeug mittels des zu emulierenden Umgebungssensors Rohdaten in der Kollisionssituation aufgenommen und gespeichert werden und die gespeicherten Rohdaten und/oder daraus interpolierte Rohdaten zur Emulation des Umgebungssensors bei der ersten Geschwindigkeit unterabgetastet verwendet werden.

Erfindungsgemäß wird also vorgeschlagen, einen teueren und umständlich zu montierenden Umgebungssensor nicht mehr tatsächlich vorzusehen, sondern im tatsächlich durchgeführten Crashtest lediglich noch zu emulieren, wobei die Basis der Emulation zuvor aufgenommene und gespeicherte Rohdaten eines realen Umgebungssensors bilden, die in der gleichen Kollisionssituation aufgenommen worden sind, die jedoch mit einer deutlich langsameren zweiten Geschwindigkeit nachgestellt wurde. Das bedeutet also, dass zunächst die Trajektorie des Kraftfahrzeugs auf der Crashbahn in der bestimmten Kollisionssituation, beispielsweise in einer Crashhalle, sehr langsam mit einem insbesondere baugleichen Kraftfahrzeug, das den Umgebungssensor verbaut hat, abgefahren wird, wobei Rohdaten des Umgebungssensors abgegriffen und gespeichert werden. Mit besonderem Vorteil kann dabei die Kollision durch eine Bremsung kurz, insbesondere wenige Zentimeter, beispielsweise 10 Zentimeter, vor dem Kollisionspartner vermieden werden, so dass keinerlei Beschädigung des die Rohdaten des realen Umgebungssensors aufnehmenden Kraftfahrzeugs oder gar des Umgebungssensors zu befürchten steht. Dabei können sehr geringe Geschwindigkeiten gewählt werden, beispielsweise eine Geschwindigkeit von 10 km/h als zweite Geschwindigkeit. Findet nun die tatsächliche Kollisionssituation bei einer höheren Geschwindigkeit statt, können die Rohdaten dennoch verwendet werden. Nachdem der Umgebungssensor in einem bestimmten Zyklus, beispielsweise 20 bis 40 ms, Rohdaten aufnimmt, liegen bei der niedrigeren zweiten Geschwindigkeit auf derselben durchfahrenen Strecke mehr Messpunkte vor als bei der höheren ersten Geschwindigkeit, so dass mithin vorgeschlagen wird, eine Unterabtastung der gespeicherten und gegebenenfalls interpolierter Rohdaten vorzunehmen, um so äußerst realitätsnah Sensordaten für die spezielle Kollisionssituation auch beim eigentlichen Crashtest zu erhalten. Bestimmt wird der Grad der Unterabtastung dabei durch das Verhältnis der ersten und der zweiten Geschwindigkeit.

Dabei sind, wie bereits beschrieben, im Wesentlichen zwei Möglichkeiten denkbar, wobei zum einen ohne eine Interpolation gearbeitet werden kann, zum anderen mit einer Interpolation der gespeicherten Rohdaten. So kann bevorzugt vorgesehen sein, dass die erste Geschwindigkeit ein ganzzahliges Vielfaches der zweiten Geschwindigkeit ist und die gespeicherten Rohdaten unterabgetastet verwendet werden. In diesem Fall ist also keine Interpolation notwendig, sondern es können unmittelbar die gespeicherten Rohdaten verwendet werden. Sind beispielsweise die gespeicherten Rohdaten bei einer Geschwindigkeit von 20 km/h als zweite Geschwindigkeit aufgenommen worden und wird der Crashtest, bei dem die Emulation des Umgebungssensors stattfinden soll, bei einer Geschwindigkeit von 100 km/h gefahren, so wird jedes fünfte gespeicherte Rohdatum als Grundlage der Emulation verwendet.

Alternativ (oder bei mehreren aufeinander folgenden Crashtests mit unterschiedlichen ersten Geschwindigkeit auch aufeinander folgend) ist es möglich, dass bei nicht einem ganzzahligen Vielfachen der zweiten Geschwindigkeit entsprechender erster Geschwindigkeit zunächst ein Upsampling der gespeicherten Rohdaten erfolgt, wobei zur Emulation eine Unterabtastung der upgesampleten Rohdaten erfolgt. Verfahren zu einer solchen Abtastratenerhöhung (Upsampling) sind bekannt, wobei das Upsampling im Wesentlichen auch einer Interpolation entspricht. Denkbar ist es beispielsweise, wenn die erste Geschwindigkeit dem 3,5-fachen der zweiten Geschwindigkeit entspricht, zunächst die Abtastrate zu verdoppeln, um dann eine Unterabtastung (Downsampling) um den Faktor 7 durchzuführen, das bedeutet, es wird jeder siebte Wert der upgesampleten Rohdaten, die sich aus den gespeicherten Rohdaten und den interpolierten Rohdaten zusammensetzen, verwendet. Es sei jedoch angemerkt, dass es auch andere Möglichkeiten gibt, die gespeicherten Rohdaten zu interpolieren.

Nachdem zur Aufnahme der Rohdaten mit dem realen Umgebungssensor dieselbe Trajektorie verwendet wird, die auch in der tatsächlichen Kollisionssituation dann genutzt wird, entsprechen die letztlich emulierten Sensordaten sehr realitätstreu dem, was auch ein realer Sensor aufgenommen hätte. Verzerrungen durch die unterschiedlichen Geschwindigkeiten aufgrund der endlichen Messzeit sind eher gering. Mithin ergeben sich durch die Emulation Sensordaten, die als gleichwertig mit denen eines real verbauten Umgebungssensors angesehen werden können.

Es sei an dieser Stelle bereits angemerkt, dass sich das erfindungsgemäße Verfahren selbstverständlich auch auf mehrere in einem Sicherheitssystem zu nutzende Umgebungssensoren parallel anwenden lässt. Zudem sei darauf hingewiesen, dass ein analoges Vorgehen auch für ein sehr langsam gefahrenes Relativbewegungsszenario als Kollisionssituation, beispielsweise einen nachzustellenden Fahrzeug-Fahrzeug-Crashtest, mit zwei oder mehr Kollisionspartnern möglich ist.

Allgemein können die unterabgetasteten Rohdaten, die auch als manipulierte Rohdaten bezeichnet werden können, nun einem beliebigen anderen Kraftfahrzeug, das bei dem tatsächlichen Crashtest bzw. in der tatsächlichen Kollisionssituation untersucht wird, vorgespielt werden. Dadurch wird also der Effekt erreicht, dass die Steuereinrichtungen des gecrashten Kraftfahrzeugs die Signale erhalten, die von einem Umgebungssensor (vorausschauenden Sensor) in dem jeweiligen Hallen- oder Feldszenario geliefert worden wären. Mithin können die Funktionen des Sicherheitssystems, die auf die vorausschauende Informationsquelle zugreifen, auch im Crashfall mit realitätsgetreuen Sensormesswerten bis in den Nahbereich auch bei höheren Relativgeschwindigkeiten getestet werden.

Insgesamt erlaubt es das vorliegende Verfahren also, beruhend auf den gleichen, einmal eingefahrenen, vorausschauenden Rohdaten, Signale für verschiedene erste Geschwindigkeiten zu generieren, so dass Funktionen eines Sicherheitssystems, die solche Informationen benötigen, im Crashfall mit getestet werden können. Dabei spart man nicht nur die Umgebungssensoren, die im Crashtest zerstört werden würden, sondern auch den Einbau und die kostspielige sowie die zeitintensive Integration dieser Sensoren. Damit können mit einer einzigen langsamen Versuchsfahrt ohne Zerstörung von Material eine große Anzahl von weiteren Versuchsfahrten höherer Relativgeschwindigkeit auf derselben Trajektorie in derselben Kollisionssituation virtuell nachgestellt werden, was eine höhere Testraumabdeckung und Zeitvorteile mit sich bringt.

In weiterer Ausgestaltung der vorliegenden Erfindung kann vorgesehen sein, dass bei einer insbesondere geschwindigkeitsabhängigen Vorverarbeitung der mit dem Umgebungssensor aufgenommenen Daten das Abgreifen der Rohdaten vor der Vorverarbeitung erfolgt und bei der Emulation die unterabgetasteten Rohdaten vorverarbeitet werden. Häufig werden Rohdaten, insbesondere bereits innerhalb des Umgebungssensors, noch vorverarbeitet, bevor sie von einer Steuereinrichtung, beispielsweise der Steuereinrichtung eines vorausschauenden Sicherheitssystems, verarbeitet werden. In diese Vorverarbeitungen, zu denen beispielsweise eine Kalman-Filterung zählen kann, gehen meist bereits weitere Annahmen, insbesondere die Geschwindigkeit, mit ein. Insbesondere dann, wenn eine Geschwindigkeitsabhängigkeit vorliegt, ist es vorteilhafter, die Rohdaten bereits vor der Vorverarbeitung abzugreifen, nachdem beim erfindungsgemäßen Verfahren ja von einer niedrigen zweiten Geschwindigkeit auf höhere erste Geschwindigkeiten emuliert werden soll. Auf diese Weise werden also durch die Vorverarbeitung möglicherweise entstehende Fehler vermieden, in denen diese für die verschiedenen ersten Geschwindigkeiten im Rahmen der Emulation angepasst auf die erste Geschwindigkeit erfolgt.

Im Allgemeinen kann der Umgebungssensor dabei ein bildgebender Sensor, insbesondere eine Kamera oder eine PMD, oder ein Radarsensor oder ein Lasersensor oder ein Ultraschallsensor sein. Es sei an dieser Stelle angemerkt, dass das erfindungsgemäße Verfahren selbstverständlich auch auf mehrere Sensoren angewandt werden kann, wenn ein Sicherheitssystem die Daten mehrerer Umgebungssensoren verarbeitet.

Die Erfindung betrifft ferner ein Verfahren zum Testen eines vorausschauenden Sicherheitssystems eines Kraftfahrzeugs in einer Kollisionssituation, welches Sicherheitssystem eine Daten eines Umgebungssensors, insbesondere über einen Fahrzeugbus, empfangende Steuereinrichtung umfasst, welche sich dadurch auszeichnet, dass der Umgebungssensor mittels des erfindungsgemäßen Verfahren zur Emulation eines Umgebungssensors in einem Kraftfahrzeug emuliert wird. In einem solchen Verfahren können beispielsweise Crashtests ohne die zwangsläufige Zerstörung teueren Umfeldsensormaterials durchgeführt werden. Die Ausführungen bezüglich des erfindungsgemäßen Emulationsverfahrens lassen sich analog auf das erfindungsgemäße Testverfahren übertragen, so dass damit auch die dort genannten Vorteile erreicht werden können. Insbesondere sei angemerkt, dass sich das erfindungsgemäße Testverfahren sowohl für Kollisionssituationen, letztlich also Crashtests, innerhalb einer Halle als auch auf Feldversuche anwenden lässt.

Schließlich betrifft die vorliegende Erfindung noch eine Emulationsvorrichtung für einen Umgebungssensor eines Kraftfahrzeugs, umfassend eine Speichereinrichtung für bei einer zweiten Geschwindigkeit, die kleiner als eine für die Emulation gefahrene erste Geschwindigkeit ist, aufgenommene und/oder daraus interpolierte Rohdaten sowie eine Steuereinheit zur Auswahl unterabgetasteter Rohdaten in Abhängigkeit des Verhältnisses der ersten Geschwindigkeit und der zweiten Geschwindigkeit. Eine solche Emulationsvorrichtung kann hervorragend, einen Umgebungssensor ersetzend, in dem erfindungsgemäßen Testverfahren innerhalb eines Kraftfahrzeugs eingesetzt werden, das an dem tatsächlichen Crashtest teilnimmt. Beispielsweise kann eine derartige Emulationsvorrichtung über eine geeignete Schnittstelle an einen Fahrzeugbus angeschlossen werden, wobei sie so untergebracht werden kann, dass sie gegebenenfalls nicht einmal beschädigt wird. Sie umfasst in jedem Fall eine Speichereinrichtung, in der die gegebenenfalls upgesampleten oder anderweitig interpolierten Rohdaten gemeinsam mit den mit dem realen Sensor aufgenommenen Rohdaten abgespeichert sind und abhängig von der auf der Trajektorie gefahrenen tatsächlichen ersten Geschwindigkeit unterabgetastet verwendet werden können, um den Umgebungssensor zu emulieren. Hierzu ist eine Steuereinheit vorgesehen, die die Auswahl und Weitergabe der entsprechenden Rohdaten durch Unterabtastung steuert.

In vorteilhafter Weiterbildung einer derartigen Emulationsvorrichtung kann vorgesehen sein, dass sie ferner eine Vorverarbeitungseinheit für die unterabgetasteten Rohdaten und eine Schnittstelle für einen Fahrzeugbus, insbesondere einen CAN-Bus, umfasst. Wie bereits bezüglich des erfindungsgemäßen Verfahrens beschrieben, kommt es häufig noch zu einer insbesondere geschwindigkeitsabhängigen oder anderweitig weiteres Wissen einbringenden Vorverarbeitung der Rohdaten, bevor die Rohdaten bei einem realen Umgebungssensor auf den Fahrzeugbus gegeben werden. Entsprechend kann die Emulationsvorrichtung auch eine Vorverarbeitungseinheit umfassen, die beispielsweise durch entsprechende elektronische Komponenten gebildet wird und einer Vorverarbeitungseinheit entspricht, wie sie auch in dem realen Sensor eingesetzt würde. Somit lässt sich die Emulationsvorrichtung dann den Umgebungssensor ersetzend an den Fahrzeugbus anschließen und liefert realitätsnahe Sensordaten bei hohen Geschwindigkeiten, ohne dass tatsächlich ein Umgebungssensor in das den Crashtest durchführende Kraftfahrzeug eingebaut werden muss und dort gegebenenfalls zerstört werden muss.

Weitere Vorteile und Einzelheiten der vorliegenden Erfindung ergeben sich aus den im folgenden beschriebenen Ausführungsbeispielen sowie anhand der Zeichnungen. Dabei zeigen:
- Fig. 1: eine Illustration zu einem ersten Schritt des erfindungsgemäßen Verfahrens,
- Fig. 2: die Struktur eines verwendeten Umfeldsensors,
- Fig. 3: eine Skizze zum weiteren Ablauf des erfindungsgemäßen Emulationsverfahrens,
- Fig. 4: eine Skizze zur Unterabtastung der Rohdaten,
- Fig. 5: eine Skizze zum erfindungsgemäßen Testverfahren, und
- Fig. 6: eine erfindungsgemäße Emulationsvorrichtung.

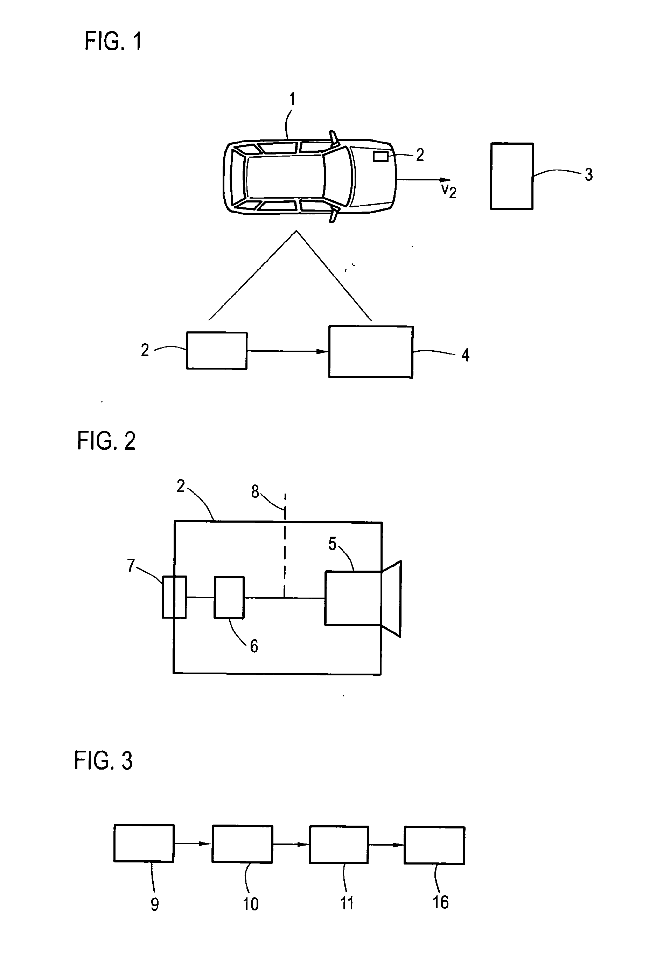

Das erfindungsgemäße Testverfahren für ein vorausschauendes Sicherheitssystem eines Kraftfahrzeugs, welches im vorliegenden Falle die Vorparametrierung von im Falle einer Kollision auslösenden Systemen betrifft, umfasst auch das erfindungsgemäße Emulationsverfahren. Die grundsätzliche Idee ist es, dass, wenn ein Crashtest in einer bestimmten, definierten Kollisionssituation mit einer definierten Trajektorie des das Sicherheitssystem umfassenden Kraftfahrzeugs bei wenigstens einer hohen ersten Geschwindigkeit durchgeführt werden soll, zunächst bei einer zweiten, niedrigeren Geschwindigkeit Rohdaten des zu emulierenden Umgebungssensors aufgenommen werden und diese dann zeitlich neu skaliert werden, das bedeutet, eine Unterabtastung wird vorgenommen, um die mit dem realen Sensor bei der zweiten Geschwindigkeit aufgenommenen Rohdaten auch bei höheren ersten Geschwindigkeiten einsetzen zu können. Fig. 1 zeigt dazu, wie zunächst die Rohdaten aufgenommen werden. Ein Kraftfahrzeug 1, das insbesondere baugleich zu einem später in dem tatsächlichen Crashtest verwendeten Kraftfahrzeug ist und den realen, zu emulierenden Umgebungssensor 2 umfasst, bewegt sich auf einer vorgegebenen Trajektorie mit der kleinen, beispielsweise 10 km/h betragenden, zweiten Geschwindigkeit v₂ auf ein Kollisionsobjekt 3 zu. Während dieser gesamten Fahrt mit der Geschwindigkeit v₂ werden Rohdaten von dem Sensor 2 abgegriffen und in einem Datenspeicher 4 für Rohdaten abgelegt. Kurz vor dem Kollisionsobjekt 3, insbesondere wenige Zentimeter, beispielsweise 10 cm, davor, wird das Kraftfahrzeug 1 abgebremst und so eine tatsächliche Kollision vermieden. Kraftfahrzeug 1 und Umgebungssensor 2 bleiben mithin unbeschädigt.

Fig. 2 zeigt näher die Struktur des Umgebungssensors 2. Er umfasst neben den eigentlichen sensorischen Komponenten 5 eine Vorverarbeitungseinheit 6, in der eine geschwindigkeitsabhängige Vorverarbeitung der von den Komponenten 5 gewonnenen Daten stattfindet, beispielsweise eine Kalman-Filterung. Die so vorverarbeiteten Sensordaten können dann über eine Schnittstelle 7 auf einen Fahrzeugbus, insbesondere einen CAN-Bus, gegeben werden. Im hier dargestellten Ausführungsbeispiel des erfindungsgemäßen Testverfahrens und Emulationsverfahrens werden die Rohdaten des Sensors 2, wie durch die gestrichelte Linie 8 angedeutet, bereits vor der Vorverarbeitungseinheit 6 abgegriffen, bevor also weitere Informationen, insbesondere die zweite Geschwindigkeit v₂ die Daten beeinflussen können.

Fig. 3 zeigt den weiteren Verlauf des erfindungsgemäßen Emulationsverfahrens. Sollen die gespeicherten Rohdaten 9 zu einem späteren Zeitpunkt zur Emulation des Umgebungssensors 2 während eines Crashtests eingesetzt werden, bei dem dieselbe Trajektorie wie bei der Aufnahme gemäß Fig. 1 gefahren wird, hängt das weitere Vorgehen im Wesentlichen davon ab, ob die erste Geschwindigkeit ein ganzzahliges Vielfaches der zweiten Geschwindigkeit ist. Ist dies nicht der Fall, so ist eine Interpolation in einem Schritt 10, der nur für diesen Fall vorgesehen ist, notwendig. Hierbei werden die gespeicherten Rohdaten letztlich um weitere, interpolierte Rohdaten ergänzt, indem durch Upsampling die Abtastrate von dem Zyklus des Umgebungssensors 2 ausgehend zunächst erhöht wird, um später eine der ersten Geschwindigkeit entsprechende Unterabtastung überhaupt ermöglichen zu können.

Bevorzugt wird jedoch, dass, was beispielsweise bei einer zweiten Geschwindigkeit von 10 km/h in den meisten Fällen zu realisieren sein dürfte, die erste Geschwindigkeit ein ganzzahliges Vielfaches der zweiten Geschwindigkeit ist, so dass rein auf den gespeicherten, nicht ergänzten Rohdaten 9 gearbeitet werden kann und der Schritt 10 nicht erforderlich ist.

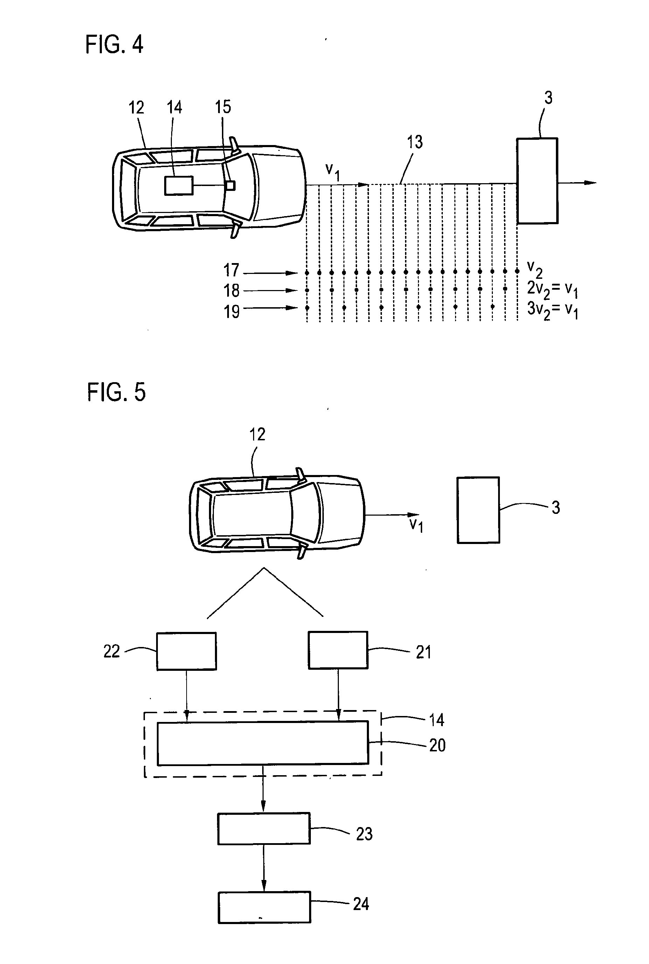

In einem Schritt 11 erfolgt dann eine Unterabtastung der gespeicherten und gegebenenfalls in einem Schritt 10 ergänzten Rohdaten 9. Dies sei durch die Skizze in Fig. 4 näher erläutert, in der das für den eigentlichen Crashtest verwendete, keinen Umgebungssensor 2 umfassende Kraftfahrzeug 12 auf seinem Weg zum Kollisionsobjekt 3 mit der ersten Geschwindigkeit v₁ gezeigt ist. Die Trajektorie 13 entspricht dabei der Trajektorie, die das Kraftfahrzeug 1 bei der Aufnahme der Rohdaten 9 mit der zweiten Geschwindigkeit v₂ abgefahren ist. In dem Kraftfahrzeug 12 ist das zu testende vorausschauende Sicherheitssystem 14 verbaut, welches über den Fahrzeugbus mit einer später noch genauer erläuterten Emulationsvorrichtung 15 verbunden ist, die ihm die unterabgetasteten Rohdaten 16 (Fig. 3) - auch als manipulierte Rohdaten bezeichnet - zuführen soll.

Im unteren Bereich von Fig. 4 ist das Prinzip der Unterabtastung gezeigt. In einer oberen Reihe 17 sind die Punkte gezeigt, an denen bei der zweiten Geschwindigkeit v₂ die Messwerte aufgenommen wurden. Nachdem sich der Zyklus des Umgebungssensors 2 nicht verändern würde, werden bei den höheren ersten Geschwindigkeiten v₁ weniger Messwerte an entsprechenden Positionen aufgenommen, wobei die mittlere Reihe 18 die Aufnahmepositionen bei einer ersten Geschwindigkeit v₁, die dem doppelten der zweiten Geschwindigkeit v₂ entspricht, zeigt. Ersichtlich kann ein Sensorsignal des Umgebungssensors 2 aus den gespeicherten Rohdaten in diesem Fall emuliert werden, indem nur jeder zweite tatsächliche Messwert betrachtet wird. Entsprechend gilt dann, wenn die erste Geschwindigkeit v₁ dem dreifachen der zweiten Geschwindigkeit v₂ entspricht, dass nur jedes dritte Rohdatum aus den gespeicherten Rohdaten 9 verwendet wird, vgl. untere Reihe 19.

Es liegt mithin ein äquidistantes Weglassen (Downsampling) von Rohdatensamples der gespeicherten Rohdaten 9 vor. Diese so erhaltenen unterabgetasteten Rohdaten 16 werden nun der Steuereinrichtung des vorausschauenden Sicherheitssystems 14 im Rahmen des erfindungsgemäßen Testverfahrens als Eingabe geliefert. Aus Sicht der Steuereinrichtung des Sicherheitssystems 14 ist nun kein Unterschied vorhanden zu einem Fahrzeug, in dem der Umgebungssensor 2 verbaut ist und so können Funktionen, die dessen Sensordaten benötigen, getestet werden.

Dies wird durch Fig. 5 nochmals klarer erläutet, die den wesentlichen Ablauf des erfindungsgemäßen Testverfahrens zeigt, während sich das Kraftfahrzeug 12 mit der ersten Geschwindigkeit v₁ auf das Kollisionsobjekt 3 in einem Crashtest zubewegt. Ersichtlich erhält die Steuereinrichtung 20 des vorausschauenden Sicherheitssystems 14 als Eingangsdaten sowohl Daten 21 von in dem Kraftfahrzeug 12 tatsächlich verbauten Sensoren als auch die im Übrigen selbstverständlich, worauf im Folgenden noch kurz eingegangen werden wird, gemäß der Vorverarbeitungseinheit 6 aufbereiteten, unterabgetasteten, emulierten Sensordaten 22. Die Daten 21, 22 werden dabei jeweils über einen hier nicht näher gezeigten Fahrzeugbus, insbesondere einen CAN-Bus, zugeführt, wobei die aufbereiteten, unterabgetasteten, emulierten Sensordaten 22 von der Emulationsvorrichtung 15 geliefert werden. Mit den Daten 21, 22 können nun auch Funktionen 23 durchgeführt werden, die die Daten des Umgebungssensors 2 benötigen. Entsprechend können dann in dem Kraftfahrzeug 12 Aktoren 24, beispielsweise Airbags, Gurtstraffer und dergleichen angesteuert und für die Kollision mit dem Kollisionsobjekt 3 vorkonditioniert und somit getestet werden.

Es werden also letztlich durch Auswahl der richtigen Rohdatensamples aus den gespeicherten Rohdaten 9 in Abhängigkeit des Verhältnisses der ersten Geschwindigkeit v₁ zur zweiten Geschwindigkeit v₂ neue Streams manipulierter Rohdaten 16 erzeugt, wie sie bei der höheren Geschwindigkeit v₁ gemessen werden würden, was durch Unterabtastung erreicht wird. Diese manipulierten, unterabgetasteten Rohdaten 16 werden dann noch entsprechend vorverarbeitet, um die emulierten Sensordaten 22 zu erzeugen, welche dann über den Fahrzeugbus der Steuereinrichtung 20 zur Verfügung gestellt werden.

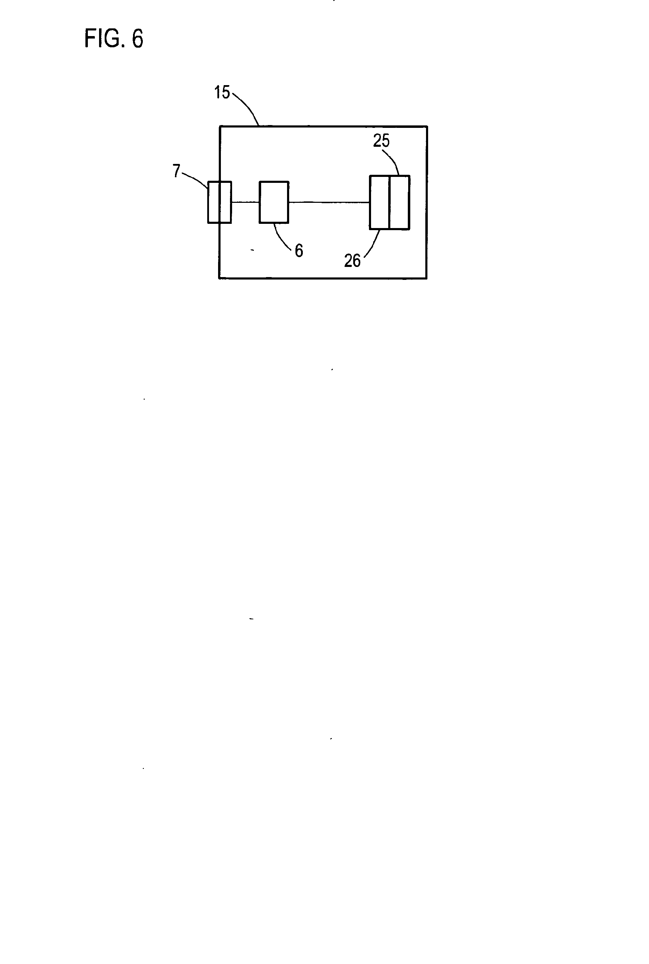

Dazu kann, wie bereits erwähnt, die erfindungsgemäße Emulationsvorrichtung 15 verwendet werden, die in Fig. 6 genauer dargestellt ist. Sie umfasst eine Speichereinrichtung 25 für die gespeicherten Rohdaten 9 (gegebenenfalls die gespeicherten und interpolierten Rohdaten) und eine Steuereinheit 26, die entsprechend der ersten Geschwindigkeit v₁ die Unterabtastung (Downsampling) übernimmt. Diese unterabgetasteten Rohdaten 16 werden dann wie in dem Sensor 2 einer Vorverarbeitungseinheit 6 zugeführt und über eine Schnittstelle 7 an den Fahrzeugbus, beispielsweise einen CAN-Bus, weitergegeben.

Die Emulationsvorrichtung 15 kann dabei mit einem stabilen Gehäuse umgeben werden und/oder an einem sicheren Ort innerhalb des Kraftfahrzeugs 12 positioniert werden, um für mehrere Crashtests unbeschädigt eingesetzt werden zu können, indem sie beispielsweise für einen weiteren Crashtest an den Fahrzeugbus eines weiteren Kraftfahrzeugs 12 angeschlossen wird.

Es sei an dieser Stelle noch angemerkt, dass sich die erfindungsgemäßen Verfahren und Emulationsvorrichtungen selbstverständlich auch für mehrere Umgebungssensoren 2 realisieren lassen und/oder selbstverständlich auch Tests für Kollisionssituationen mit bewegten Kollisionspartnern denkbar sind.

## Patentansprüche

1. Verfahren zur Emulation eines Umgebungssensors (2) in einem Kraftfahrzeug (12) in einer bestimmten Kollisionssituation mit einer ersten vorgegebenen Geschwindigkeit des Kraftfahrzeugs (12),
**dadurch gekennzeichnet,**
**dass** bei einer zweiten Geschwindigkeit, die kleiner als die erste Geschwindigkeit ist, mit dem und/oder einem insbesondere baugleichen Kraftfahrzeug (1) mittels des zu emulierenden Umgebungssensors (2) Rohdaten (9) in der Kollisionssituation aufgenommen und gespeichert werden und die gespeicherten Rohdaten (9) und/oder daraus interpolierte Rohdaten zur Emulation des Umgebungssensors (2) bei der ersten Geschwindigkeit unterabgetastet verwendet werden.

2. Verfahren nach Anspruch 1,
**dadurch gekennzeichnet,**
**dass** die erste Geschwindigkeit ein ganzzahliges Vielfaches der zweiten Geschwindigkeit ist und die gespeicherten Rohdaten (9) unterabgetastet verwendet werden.

3. Verfahren nach Anspruch 1,
**dadurch gekennzeichnet,**
**dass** bei nicht einem ganzzahligen Vielfachen der zweiten Geschwindigkeit entsprechender erster Geschwindigkeit zunächst ein Upsampling (10) der gespeicherten Rohdaten (9) erfolgt, wobei zur Emulation eine Unterabtastung der upgesampleten Rohdaten erfolgt.

4. Verfahren nach einem der vorangehenden Ansprüche,
**dadurch gekennzeichnet,**
**dass** bei einer insbesondere geschwindigkeitsabhängigen Vorverarbeitung der mit dem Umgebungssensor (2) aufgenommen Daten das Abgreifen der Rohdaten (9) vor der Vorverarbeitung erfolgt und bei der Emulation die unterabgetasteten Rohdaten (16) vorverarbeitet werden.

5. Verfahren nach einem der vorangehenden Ansprüche,
**dadurch gekennzeichnet,**
**dass** als Umgebungssensor (2) ein bildgebender Sensor, insbesondere eine Kamera oder eine PMD, oder ein Radarsensor oder ein Lasersensor oder ein Ultraschallsensor emuliert wird.

6. Verfahren zum Testen eines vorausschauenden Sicherheitssystems (14) eines Kraftfahrzeugs (12) in einer Kollisionssituation, welches Sicherheitssystem (14) eine Daten (22) eines Umgebungssensors (2), insbesondere über einen Fahrzeugbus, empfangende Steuereinrichtung (20) umfasst,
**dadurch gekennzeichnet,**
**dass** der Umgebungssensor (2) in einem Verfahren nach einem der vorangehenden Ansprüche emuliert wird.

7. Emulationsvorrichtung (15) für einen Umgebungssensor (2) eines Kraftfahrzeugs (12), **dadurch gekennzeichnet,**
**dass** sie zur Ausführung eines Verfahrens nach einem der Ansprüche 1 bis 6 ausgebildet ist und eine Speichereinrichtung (25) für bei einer zweiten Geschwindigkeit, die kleiner als eine für die Emulation gefahrene erste Geschwindigkeit ist, aufgenommene Rohdaten (9) und/oder daraus interpolierte Rohdaten sowie eine Steuereinheit (26) zur Auswahl unterabgetasteter Rohdaten (16) in Abhängigkeit des Verhältnisses der ersten Geschwindigkeit und der zweiten Geschwindigkeit umfasst.

8. Emulationsvorrichtung nach Anspruch 7,
**dadurch gekennzeichnet,**
**dass** sie ferner eine Vorverarbeitungseinheit (6) für die unterabgetasteten Rohdaten (16) und eine Schnittstelle (7) für einen Fahrzeugbus, insbesondere einen CAN-Bus, umfasst.

## Claims

1. Procedure for emulating an environmental sensor (2) in a motor vehicle (12) in a specific collision situation with a predefined speed of the motor vehicle (12),
identified by the fact that
at a second speed that is less than the first speed, with the motor vehicle and/or a particularly structurally identical motor vehicle (1), raw data (9) is recorded and saved in the collision situation by means of the environmental sensor (2) to be emulated, and the raw data (9) saved and/or raw data interpolated from it is used in emulating the environmental sensor (2) in the case of the first speed, once sub-sampled.

2. Procedure as per claim 1,
identified by the fact that
the first speed is an integral multiple of the second speed, and the saved raw data (9) is used once subsampled.

3. Procedure as per claim 1,
identified by the fact that
if the first speed is not an integral multiple of the second speed, an upsampling (10) of the saved raw data shall first take place, where the upsampled raw data shall be subsampled for emulation.

4. Procedure as per one of the previous claims,
identified by the fact that
in the event of a specially speed-dependent preprocessing of the data recorded using the environmental sensor (2), the raw data (9) is captured before the preprocessing, and the subsampled raw data (16) is preprocessed in the emulation.

5. Procedure as per one of the previous claims,
identified by the fact that
an imaging sensor, in particular, a camera, PMD, radar sensor, laser sensor or ultrasonic sensor is emulated as an environmental sensor (2).

6. Procedure for testing a forward-looking safety system (14) of a motor vehicle (12) in a collision situation, which system (14) contains data (22) of an environmental sensor (2), in particular, about a vehicle bus, receiving control device (20), Identified by the fact that
the environmental sensor (2) is emulated in a procedure as per one of the previous claims.

7. Emulation device (15) for an environmental sensor (2) of a motor vehicle (12), Identified by the fact that it is designed to carry out procedure as per one of the claims from 1 to 6, and
includes a storage device (25) for a second speed that is less than the first speed driven for the emulation, recorded raw data (9) and/or raw data interpolated from it, and a control unit (26) for selecting sub-sampled raw data (16) depending upon the ratio of the first speed and second speed.

8. Emulation device as per claim 7,
identified by the fact that
it also contains a pre-processing unit (6) for the sub-sampled raw data (16) and an interface (7) for a vehicle bus, in particular, a CAN bus.

## Revendications

1. Procédé d'émulation d'un capteur d'environnement (2) dans un véhicule automobile (12) dans une situation de collision donnée à une première vitesse prédéfinie du véhicule automobile (12),
**caractérisé en ce**
**que** des données brutes (9) sont prises et enregistrées dans la situation de collision dans le cas d'une deuxième vitesse, qui est inférieure à la première vitesse, avec le et/ou un véhicule automobile (1) présentant en particulier la même structure au moyen du capteur d'environnement (2) à émuler, et les données brutes (9) enregistrées et/ou les données brutes déduites de celles-ci par interpolation sont utilisées de manière sous-échantillonnée aux fins de l'émulation du capteur d'environnement (2) dans le cas de la première vitesse.

2. Procédé selon la revendication 1,
**caractérisé en ce**
**que** la première vitesse est un multiple à nombres entiers de la deuxième vitesse, et les données brutes (9) enregistrées sont utilisées de manière sous-échantillonnée.

3. Procédé selon la revendication 1,
**caractérisé en ce**
**que** dans un premier temps un suréchantillonnage (10) des données brutes (9) enregistrées est effectué dans le cas d'une première vitesse ne correspondant pas à un multiple à nombres entiers de la deuxième vitesse, où un sous-échantillonnage des données brutes suréchantillonnées est effectué aux fins de l'émulation.

4. Procédé selon l'une quelconque des revendications précédentes,
**caractérisé en ce**
**que** l'accès aux données brutes (9) est effectué avant le traitement préalable dans le cas d'un traitement préalable dépendant en particulier de la vitesse des données prises à l'aide du capteur d'environnement (2), et les données brutes (16) sous-échantillonnées sont préalablement traitées dans le cas de l'émulation.

5. Procédé selon l'une quelconque des revendications précédentes,
**caractérisé en ce**
**qu'**un capteur transmetteur d'images, en particulier une caméra ou une PMD, ou un capteur de radar ou un capteur laser ou un capteur à ultrasons est émulé en tant que capteur d'environnement (2).

6. Procédé servant à tester un système de sécurité (14) par anticipation d'un véhicule automobile (12) dans une situation de collision, lequel système de sécurité (14) comprend un dispositif de commande (20) recevant des données (22) d'un capteur d'environnement (2), en particulier par l'intermédiaire d'un bus de véhicule,
**caractérisé en ce**
**que** le capteur d'environnement (2) est émulé selon un procédé selon l'une quelconque des revendications précédentes.

7. Dispositif d'émulation (15) pour un capteur d'environnement (2) d'un véhicule automobile (12),
**caractérisé en ce**
**qu'**il est réalisé aux fins de l'exécution d'un procédé selon l'une quelconque des revendications 1 à 6, et comprend un système d'enregistrement (25) pour des données brutes (9) prises et/ou pour des données brutes déduites de celles-ci par interpolation dans le cas d'une deuxième vitesse, qui est inférieure à une première vitesse de roulement pour l'émulation, ainsi qu'une unité de commande (26) servant à sélectionner des données brutes (16) sous-échantillonnées selon le rapport entre la première vitesse et la deuxième vitesse.

8. Dispositif d'émulation selon la revendication 7,
**caractérisé en ce**
**qu'**il comprend en outre une unité de traitement préalable (6) pour les données brutes (16) sous-échantillonnées et une interface (7) pour un bus de véhicule, en particulier un bus CAN.
